# EUROPEAN PATENT SPECIFICATION

(11) **EP 1 321 030 B1**
(45) Date of publication and mention of the grant of the patent: **08.03.2006**
(21) Application number: 02027623.4
(22) Date of filing: 11.12.2002
(51) Int. Cl.: A01K 1/01

(54) **Pet excreta treating system**
Anlage zum Aufbereiten von Haustierkot
Installation pour le traitement d'excréments d'animaux domestiques

(30) Priority: 21.12.2001 JP 2001389818
(43) Date of publication of application: 25.06.2003
(73) Proprietor: KAO CORPORATION, Chuo-ku, Tokyo (JP)
(72) Inventor: Otsuji, Kazuya, Sumida-ku, Tokyo (JP)
(74) Representative: Vossius & Partner

(56) References cited:
- EP-A- 1 125 494
- US-A- 3 965 863

## Description

The present invention relates to a pet excreta treating system used to handle the excreta of a pet, particularly a cat or a dog.

The teaching disclosed in JP-A-7-67489 is known as a conventional technique relating to a litter box for a pet. The litter box disclosed comprises a tray, a perforated member with openings which partitions the tray into upper and lower parts, litter placed on the perforated member, and an absorbent member placed under the perforated member so that the litter is prevented from being mixed with the absorbent member.

JP-A-9-308403 discloses litter (pellets) prepared by heat compressing softwood sawdust which self-disintegrates on water absorption. If this litter is used in the litter box of JP-A-7-67489 described *supra*, it would be much time-consuming to change only the litter because the litter having absorbed urine disintegrates, drops through the openings of the perforated member, and scatters over the absorbent member. Further, part of the disintegrated litter remains on the perforated member to emanate an offensive odor. Besides, the litter must be replaced with fresh one each time the litter . disintegrates on urine absorption, which is bad economy.

EP-A-1 125 494 discloses a pet excreta treating system comprising a draining board and an absorbent mat of flat shape which is laid beneath the draining board. In particular, the lower surface of the draining board is in close contact with the upper surface of the absorbent mat.

US-A-3 965 863 discloses a household pet litter unit including one chemically treated receiving area for liquid excreta, and a second chemical treatment area for receipt of solid excreta.

An object of the present invention is to provide a pet excreta treating system with which generation of offensive odors from excreted urine is controlled for a long time and which can be used hygienically.

This object is achieved with the features of the claims.

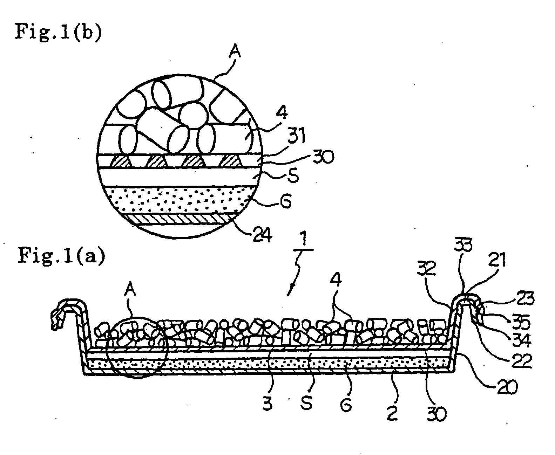

The present invention will be more particularly described with reference to the accompanying drawing, in which Fig. 1 schematically illustrates an embodiment of the pet excreta treating system according to the present invention, in which (a) is a cross-section of the system, and (b) is a partial enlarged view of (a).

The present invention will be described with particular reference to its preferred embodiment. Fig. 1 shows an embodiment of the pet excreta treatment system (hereinafter also referred to simply as a system) of the present invention. In Fig. 1(a) numeral 1 indicates the system.

As shown in Fig. 1(a), the system 1 is mainly composed of a pet excreta treating unit which comprises a tray 2, a drainboard 3 disposed in the tray 2, and a low water absorbing excreta treating material 4 disposed on the drainboard 3. The pet excreta treating unit has a space S below the drainboard 3, in which a water-disintegrable sheet 6 impregnated with a liquid containing a germicide or a deodorizer is adapted to be placed.

The system 1 comprises the pet excreta treating unit and the water-disintegrable sheet 6 put in the space S.

The tray 2 has a flange 21 around the top end of a side wall 20. The flange 21 has a pendent wall 22. The pendent wall 22 has on its outer periphery a projection 23 which fits into a depression 35 of the drainboard 3 hereinafter described. It is sufficient for indoor use that the side wall 20 is 120 to 240 mm high. The shape of the tray 2 includes, but is not limited to, a rectangle, a circle, and an ellipse. While the area of the bottom 24 of the tray 2 is not particularly limited, an area of 800 to 1600 cm² suffices for indoor use.

The drainboard 3 is shaped into a tray and has a large number of drain holes 31 on the bottom plane 30. The drainboard 3 has a side wall 32 with a flange 33 around the top end thereof The flange 33 has a pendent wall 34. The pendent wall 34 has on its inner side a depression 35 into which the projection 23 of the tray 2 is fitted. The cross-sectional area of the drain hole 31 and the open area ratio of the bottom plane 30 are subject to appropriate variation according to the form of the excreta treating material 4 and the like. A cross-sectional area of 9 to 36 mm² will be sufficient for the drain hole 31, and an open area ratio of 25 to 45% will be enough.

The system 1 according to this embodiment is designed so that the space S defined *supra* may be formed under the bottom plane 30 of the drainboard 3 as if the bottom of the tray 2 is raised when the drainboard 3 is fitted into the tray 2 from above the tray 2.

A back-flow preventive layer is provided in the space S between the drainboard 3 and the water-disintegrable sheet 6. In this particular embodiment, a gap forms the back-flow preventive layer. That is, the system 1 is designed to leave a gap between the bottom plane 30 of the drainboard 3 and the water-disintegrable sheet 6 placed in the tray 2. The distance from the upper side of the bottom plate 24 of the tray 2 to the bottom plane 30 of the drainboard 3 is preferably 5 to 50 mm, more preferably 10 to 20 mm, so that urine collected in the tray 2 may be prevented from being absorbed by the low-absorbing excreta treating material 4 put on the drainboard 3. Although it is preferred that the back-flow preventive layer be the above-mentioned gap, the structure is by no means limited to this design. For example, a back-flow preventive film, such as a perforated film, may be provided on the water-disintegrable sheet 6.

While the materials of the tray 2 and the drainboard 3 are not particularly limited as long as they have corrosion resistance, they are preferably integrally molded articles made of synthetic resins, such as polypropylene, polyethylene, polyethylene terephthalate, polyvinyl chloride, and ABS, for lightweight, ease of handling, and moldability. It is more preferred to use the tray 2 and the drainboard 3 having been given water repellent finish or antimicrobial finish.

The excreta treating material 4 which can be used has low water absorbing properties, preferably a water absorption of 1 to 10%, particularly 1 to 5%, as measured by the method described *infra*. For the excreta treating material itself to have low absorbing properties is advantageous in that discharged urine can swiftly pass among the pieces of the excreta treating material 4 and through the drain holes 31 of the drainboard 3 and be absorbed by the water-disintegrable sheet 6 laid under the drainboard 3 and that discharged urine is prevented from remaining on the surface of the excreta treating material 4 in the form of drops which will give off an offensive odor.

The low water absorbing excreta treating material 4 to be used preferably comprises molded pieces of prescribed shape which contain a ground material of plant origin and a synthetic resin. A ground material of plant origin contains deodorizing substances such as phenolic compounds and terpene compounds so that it produces an effect in preventing generation of offensive odors upon absorbing urine.

The shape of the excreta treating material 4 is not particularly limited but is preferably a columnar shape with its height slightly larger than its diameter as shown in Fig. 1(b) from the standpoint of moldability and the like as described later. The columnar shape preferably has a diameter of about 5 to 7 mm and a height of about 3 to 15 mm.

As stated previously, it is preferred that the excreta treating material 4 have sufficient shape retention not to disintegrate on water absorption so that it may keep its solid state before urine absorption and be therefore easy to replace with a fresh one. With such shape retention, there is no need to replace the material 4 for every urination, which is an economical advantage. Having low water absorbing properties as described above, the excreta treating material 4 hardly allows urine to stay thereon, thereby preventing offensive odor emanation.

The excreta treating material 4 preferably has a dusting ratio, which represents the degree of shape retention, of 10% by weight or less, particularly 2% or less, as measured by the method described *infra*. With this dusting ratio, the excreta treating material maintains its solid state sufficiently even after urine absorption and can easily be replaced for a fresh one. The dusting ratio has no particular lower limit. The lower the dusting ratio, the better. A practical lower limit would be about 0.1%, however, in the light of the constituent materials and the method of production of the excreta treating material 4.

### Methods of measuring dusting ratio and water absorption:

Molded pieces weighing 70 g are put in a cylinder of 80 mm in diameter and 100 mm in height which has a net of 2.8 mm openings a base. The cylinder with contents is weighed. The cylinder and the contents are soaked in water at 25±3°C for 5 seconds and, after pulled out of water, placed on an absorbent sheet (Kim Towel, a trade name, available from Crecia Corp.; basis weight: 30 g/m²) for 20 seconds. Then the contents are transferred into another cylinder of the same kind. The transfer between the two cylinders is repeated 50 times in total. The dust produced during the repeated transfer is collected, dried at 105°C for 30 minutes, and weighed. The measured weight (g) is divided by 70, and the quotient is multiplied by 100 to give the dusting ratio (%) of the excreta treating material.

Separately, the soaking wet cylinder and the contents are placed on the same absorbent sheet as used above for 20 seconds and then weighed. The difference between the thus measured weight and the weight of the cylinder and the contents before soaking is the amount of water absorbed (g), which is divided by 70, and the quotient is multiplied by 100 to give a water absorption (%) of the excreta treating material.

The materials constituting the excreta treating material 4 are then described. The material of plant origin, which is one of the materials constituting the excreta treating material 4, can be either of trees or grasses. The ground material of plant origin include ground trees (wood or bark), seed oil cake, ground grain husks, and ground grasses. Ground trees, especially of conifers, such as cedar pines, and cypresses, are preferred for moldability and deodorizing effects. The ground material preferably has a particle size of about 0.01 to 1 mm, particularly about 0.05 to 0.5 mm.

The excreta treating material 4 comprises 70 to 97% by weight, preferably 85 to 95% by weight, of the ground material of plant origin. With the ground material content being less than 70% by weight, the excreta treating material would be insufficient in not only water absorptivity but deodorizing effect. If the ground material content exceeds 97%, a considerable amount of dust would be produced after water absorption.

The synthetic resin, which is another constituent of the excreta treating material 4, is used to serve to secure shape retention and to control water absorption of the excreta treating material 4. Useful synthetic resins include polyolefins such as polyethylene and polypropylene, polyesters such as polyethylene terephthalate, polyamides, and vinyl resins. Synthetic resins having a melt flow rate (hereinafter "MFR") of 3 to 200 g/10 min, particularly 10 to 100 g/10 min, are preferred for obtaining shape retention and for suppressing dusting after water absorption. The MFR is measured in accordance with JIS K7210-1999 (ISO 1133-1997). It is also preferred to use hydrophobic synthetic resins.

The excreta treating material 4 comprises 3 to 30% by weight, preferably 5 to 15% by weight, more preferably 7 to 12% by weight, of the synthetic resin. If the resin content is less than 3% by weight, the excreta treating material will produce a considerable amount of dust. A resin content exceeding 30% not only reduces the water absorptivity but is bad economy, while dusting could be reduced.

If desired, the excreta treating material 4 can contain antimicrobial agents, coloring agents, and so forth in addition to the above-described components. The amount of each of these components is preferably 0.01 to 0.5% by weight based on the excreta treating material 4.

The excreta treating material 4 is preferably produced by the following process. A ground material of plant origin and a synthetic resin powder are mixed thoroughly at a predetermined ratio. The synthetic resin powder preferably has a particle size of about 0.01 to 0.5 mm, particularly about 0.1 to 0.3 mm, so that the ground material of plant origin may be mixed therewith uniformly.

The mixture is molded by means of a sprout molding machine. By using a sprout molding machine, the mixture is densified to provide an excreta treating material having sufficient shape retention not to disintegrate on water absorption and porosity to exhibit moderately low water absorbing properties.

Molding with a sprout molding machine is preferably conducted with no heat applied because the mixture spontaneously generates heat in the molding machine, by which the synthetic resin melts sufficiently. The particles of plant origin are bound together by the molten synthetic resin and shaped into molded pieces of prescribed shape. The phrase "with no heat applied" means no external heat applied intentionally. Therefore, spontaneous heat generation is included under the phrase "with no heat applied".

The water-disintegrable sheet 6 includes any sheet that exhibits water disintegrability and water absorptivity. It is particularly preferred for the water-disintegrable sheet 6 to have sufficient water absorption and shape retention so that it is still capable of absorbing urine even after it is impregnated with a liquid described *infra*. For example, a pulp sheet mainly comprising wood or non-wood pulp is preferably used as the water-disintegrable sheet 6. The water-disintegrable sheet 6 preferably has water disintegrability of 20 to 60 seconds, particularly 30 to 40 seconds. A water-disintegrable sheet with too high water disintegrability will disintegrate while in use. A water-disintegrable sheet with too low water disintegrability can fail to disintegrate only to clog a toilet when flushed in.

The water disintegrability of a water-disintegrable sheet is quantitatively expressed by "disintegrability" specified in JIS P4501-1993 (toilet tissue papers). "Disintegrability" is a term used to evaluate how easily an object is dispersed or dissolved in water.

The liquid with which the water-disintegrable sheet 6 is impregnated includes water containing a germicide and a deodorizer. The amounts of the germicide and the deodorizer to be added are decided appropriately with due consideration for safety to pets and odor.

Any germicide that has customarily been used for pet excreta treatment of this type can be used with no particular restriction. Such germicides include p-hydroxybenzoates, benzoic acid, salicylic acids, sorbic acids, and cationic soaps.

Any deodorizer that has customarily been used for pet excreta treatment of this type can be used with no particular restriction. Such deodorizers include betaine type or amine oxide type amphoteric surface active agents, polyphenols, and pentenes.

If desired, the liquid can contain perfumes, colorants, pH adjusters, and the like in appropriate ratios in addition to the above-described germicide and deodorizer.

In the system 1 shown in Fig. 1, urine generated by a pet, e.g., a cat passes through the gaps of the excreta treating material 4 and is quickly absorbed by the water-disintegrable sheet 6 which is laid under the drainboard 3. The absorbed urine is disinfected and deodorized with the germicide and the deodorizer. After urine passes through the excreta treating material 4, it hardly stays on the surface of the excreta treating material because of the low water absorption of the excreta treating material 4. The slight urine which remains is absorbed by the excreta treating material. Generation of offensive odors is thus controlled, and the system serves hygienically for an extended period of time. The water-disintegrable sheet 6 is very convenient to dispose of because it is flushable. Additionally, replacement of only the water-disintegrable sheet 6 suffices until the treating capacity of the excreta treating material 4 reduces so that the interval of replacement of the excreta treating material 4 is extended. Since the excreta treating material 4 maintains shape retention even after absorption, it does not crumble to become inconvenient to handle.

While the pet excreta treating system according to the present invention has the liquid-impregnated water-disintegrable sheet 6 disposed in the space S under the drainboard 3 as in the embodiment described *supra,* it is possible, but not according to the claimed invention, that the water-disintegrable sheet 6 is replaced with only the liquid, whereby urine having passed through the drainboard 3 is disinfected and deodorized. In this case, the liquid in the tray 2 having collected urine is disposed of by removing the drainboard 3 from the tray 2 and discarding the liquid into, e.g., a flush toilet. It is preferred to put a previously prepared liquid composition containing the germicide and the deodorant directly into the tray. Otherwise it is possible to put a tablet comprising the components of the liquid in the tray beforehand and pour water into the tray to prepare the liquid composition.

The pet excreta treating unit and the pet excreta treating system according to the present invention are especially useful for a cat. They are also useful for other pets, for example, small animals such as a dog.

The present invention will now be illustrated in greater detail with reference to Examples. The following Examples are presented as being exemplary of the present invention and should not be considered as limiting.

Excreta treating systems for pets were assembled as described in Examples 1 and 2 and Comparative Examples 1 and 2. A crossbred female cat weighing about 4 kg was made to use the systems for 6 days each, and the urine odor after one day and the ammonia odor after 3 days and 6 days were organoleptically evaluated as described *infra*. The results of evaluation are shown in Table 1.

### EXAMPLE 1

A water-disintegrable sheet described below was laid on the bottom of the tray of a pet excreta treating unit having the following structure to assemble a system.
1) Pet excreta treating unit
Tray:
bottom area: 1200 cm²; side wall height: 150 mm

Drainboard:
bottom area: 1100 cm²; drain hole cross-sectional area: 25 mm²; open area ratio: 35%; distance between the tray bottom and the drainboard: 15 mm

Excreta treating material:
form: column of 6.5 mm in diameter and 3 to 10 mm in height; water absorption: 2.0%; dusting ratio: 0.3%

Formulation of excreta treating material:
Larch sawdust 92 parts by weight
Polyethylene (particle size: 0.15 to 0.25 mm; MFR: 10 g/10 min; available from Nippon Unicar Co., Ltd.) 8 parts by weight

Preparation of excreta treating material:
The above components were mixed and molded by using a sprout molding machine (die diameter: 6 mm).

2) Water-disintegrable sheet
Base:
water-disintegrable pulp sheet having a basis weight of 120 g/m² (water disintegrability: 30 sec)

Formulation of liquid:

| | |
|---|---|
| Deodorizer (lauryldimethylamine oxide) | 1.0 wt% |
| Germicide (benzalkonium chloride) | 0.3 wt% |
| Perfume (hinoki oil) | 0.03 wt% |
| Water balance (to make 100 wt%) | |

Amount of liquid infiltrated into the sheet:
180 wt% based on the pulp sheet

### EXAMPLE 2, not according to the invention.

A system was assembled in the same manner as in Example 1, except that the water-disintegrable sheet was not used, and a liquid of the following formulation was directly put into the tray instead.
Formulation of liquid:

| | |
|---|---|
| Deodorant (lauryldimethylamine oxide) | 1.5 wt% |
| Germicide (benzalkonium chloride) | 0.15 wt% |
| Perfume (hinoki oil) | 0.03 wt% |
| Water balance (to make 100 wt%) | |

### COMPARATIVE EXAMPLE 1, not according to the invention

A system was fabricated in the same manner as in Example 1, except that nothing was disposed in the tray.

### COMPARATIVE EXAMPLE 2, not according to the invention,

A system was assembled in the same manner as in Example 1, except that only water was put in the tray.
Organoleptic evaluation on odor:

A panel of five members were asked to smell the system after the prescribed time of use and to score the odor on the following 5-scale system. A smaller score indicates that generation of offensive odors is suppressed more.
1: odorless
2: slight
3: noticeable
4: strong
5: very strong

As is shown in Table 1 below, it was confirmed that the systems of Examples (the products of the present invention) securely suppress the odors of urine and ammonia as compared with the comparative systems.

**TABLE 1**

| | Urine Odor | Ammonia Odor | |
|---|---|---|---|
| | after 1 day | after 3 days | after 6 days |
| Example 1 | 2 | 1 | 1 |
| Example 2 | 1 | 1 | 1 |
| Comparative Example 1 | 5 | 3 | 4 |
| Comparative Example 2 | 4 | 4 | 5 |

The present invention provides a pet excreta treating unit and a pet excreta treating system which serve hygienically while suppressing generation of offensive odors from discharged urine for an extended period of time.

## Claims

1. A pet excreta treating system which comprises a tray (2), a drainboard (3) disposed in the tray (2), and a low water absorbing excreta treating material (4) disposed on the drainboard (3) and has a space (S) under the drainboard comprising a water-disintegrable sheet (6) impregnated with a liquid containing a germicide or a deodorizer, **characterised in that** said system comprises a back-flow preventive layer between said water-disintegrable sheet (6) put in said space (S) and said drainboard (3).

2. The pet excreta treating system according to claim 1, wherein said back-flow preventive layer is a gap.

3. The pet excreta treating system according to claim 1 or 2, wherein said excreta treating material (4) has a water absorption of 3 to 10%.

4. The pet excreta treating system according to claim 1, 2 or 3, wherein said excreta treating material (4) comprises molded pieces of prescribed shape which contain 70 to 97% by weight of a ground material of plant origin and 3 to 30% by weight of a synthetic resin and has sufficient shape retention not to disintegrate on water absorption.

## Patentansprüche

1. Behandlungssystem für Haustierausscheidungen, das eine Schale (2), eine in der Schale (2) angeordnete Ablaufplatte (3) und ein auf der Ablaufplatte (3) angeordnetes, gering wasserabsorbierendes Ausscheidungsbehandlungsmaterial (4) aufweist und einen Raum (S) unter der Ablaufplatte mit einer wasserauflösbaren Bahn (6) hat, die mit einer Flüssigkeit getränkt ist, die ein Germizid oder ein Desodorans enthält, **dadurch gekennzeichnet, daß** das System eine rückflußverhindernde Schicht zwischen der in den Raum (S) gegebenen wasserauflösbaren Bahn (6) und der Ablaufplatte (3) hat.

2. Behandlungssystem für Haustierausscheidungen nach Anspruch 1, wobei die rückflußverhindernde Schicht eine Lücke ist.

3. Behandlungssystem für Haustierausscheidungen nach Anspruch 1 oder 2, wobei das Ausscheidungsbehandlungsmaterial (4) eine Wasserabsorption von 3 bis 10 % hat.

4. Behandlungssystem für Haustierausscheidungen nach Anspruch 1, 2 oder 3, wobei das Ausscheidungsbehandlungsmaterial (4) Formstücke mit vorgeschriebener Form aufweist, die 70 bis 97 Gew.-% eines pflanzlichen Mahlguts und 3 bis 30 Gew.-% eines Kunstharzes aufweisen und ausreichende Formbeständigkeit haben, um sich bei Wasserabsorption nicht aufzulösen.

## Revendications

1. Système de traitement d'excréments d'animaux domestiques qui comprend un plateau (2), une plaque d'égouttage (3) placée dans le plateau (2), et un matériau de traitement d'excréments à faible absorption d'eau (4) placé sur la plaque d'égouttage (3) et a un espace (S) sous la plaque d'égouttage comprenant une feuille désintégrable dans l'eau (6) imprégnée d'un liquide contenant un germicide ou un désodorisant, **caractérisé en ce que** ledit système comprend une couche anti-reflux entre ladite feuille désintégrable dans l'eau (6) placée dans ledit espace (S) et ladite plaque d'égouttage (3).

2. Système de traitement d'excréments d'animaux domestiques selon la revendication 1, dans lequel ladite couche anti-reflux est un espace vide.

3. Système de traitement d'excréments d'animaux domestiques selon la revendication 1 ou 2, dans lequel ledit matériau de traitement d'excréments (4) a une capacité d'absorption d'eau de 3 à 10 %.

4. Système de traitement d'excréments d'animaux domestiques selon la revendication 1, 2 ou 3, dans lequel ledit matériau de traitement d'excréments (4) comprend des pièces moulées de forme prescrite qui contiennent 70 à 97 % en poids d'un matériau broyé d'origine végétale et 3 à 30 % en poids d'une résine synthétique et a une rétention de forme suffisante pour ne pas se désintégrer lors de l'absorption d'eau.
